Europäisches Patentamt

European Patent Office

Office européen des brevets

(19)

(11) Numéro de publication: **0 127 539**
**B1**

# (12) FASCICULE DE BREVET EUROPEEN

(45) Date de publication du fascicule du brevet:
**27.01.88**

(21) Numéro de dépôt: **84401062.9**

(22) Date de dépôt: **23.05.84**

(51) Int. Cl.⁴: **G 21 C 13/06**, G 21 C 1/02,
G 21 C 17/10

(54) **Bouchon couvercle-coeur d'un réacteur nucléaire refroidi par un métal liquide.**

(30) Priorité: **26.05.83 FR 8308734**

(43) Date de publication de la demande:
**05.12.84 Bulletin 84/49**

(45) Mention de la délivrance du brevet:
**27.01.88 Bulletin 88/4**

(84) Etats contractants désignés:
**BE DE GB IT**

(56) Documents cités:
**EP - A - 0 108 691
FR - A - 2 289 031
FR - A - 2 383 504
GB - A - 2 031 642
US - A - 3 060 111
US - A - 4 064 000**

PATENTS ABSTRACTS OF JAPAN, vol. 3, no. 69 (M-62),
14 juin 1979, page 95 M 62; & JP - A - 54 45 476 (TOKYO
SHIBAURA DENKI K.K.) 10-04-1979
PATENTS ABSTRACTS OF JAPAN, vol. 3, no. 97 (M-69),
17 août 1979, page 44 M 69; & JP - A - 54 71 293 (TOKYO
SHIBAURA DENKI K.K.) 07-06-1979
PATENTS ABSTRACTS OF JAPAN, vol. 3, no. 93 (M-68),
8 août 1979, page 139 M 68; & JP - A - 54 69 694 (TOKYO
SHIBAURA DENKI K.K.) 04-06-1979

(73) Titulaire: **COMMISSARIAT A L'ENERGIE ATOMIQUE,
31/33, rue de la Fédération, F-75015 Paris (FR)**

(72) Inventeur: **Arene, Gilbert, Le Clos Vert Route de la
Loubière, F-84120 Pertuis (FR)**
Inventeur: **Verriere, Philippe, Montée des Genêts,
F-04100 Manosque (FR)**
Inventeur: **Pierazzi, Luigi, 19 Tour D'Aygosi Avenue
Gambetta, F-13100 Aix en Provence (FR)**
Inventeur: **Renaux, Charley, Les Extrées,
F-13490 Jouques (FR)**

(74) Mandataire: **Mongrédien, André et al, c/o
BREVATOME 25, rue de Ponthieu, F-75008 Paris (FR)**

(56) Documents cités: (suite)
PATENTS ABSTRACTS OF JAPAN, vol. 3, no. 154 (M-85),
18 décembre 1979, page 34 M 85; & JP - A - 54 130 788
(TOKYO SHIBAURA DENKI K.K.) 11-10-1979
KERNENERGIE, vol. 17, no. 7, 1974, pages 200-222,
Berlin, DE; K. GORSKI et al.: "Das Kernkraftwerk 'Bruno
Leuschner' Greifswald"

# Description

La présente invention se rapporte aux réacteurs nucléaires, notamment à neutrons rapides, refroidis par métal liquide. Dans de tels réacteurs, le cœur est monté à l'intérieur d'un système de cuves à axe vertical assurant le confinement du volume approprié de métal, généralement du sodium liquide. Ce volume est surmonté d'une atmosphère de gaz neutre et l'ensemble des cuves est fermé par une dalle munie d'orifices de passage permettant l'accès au cœur à l'intérieur de la cuve. Ces orifices sont fermés par des bouchons tournants. Le plus petit des bouchons tournants (P.B.T.) est lui-même percé d'un orifice fermé par un bouchon destiné à supporter les moyens permettant de surveiller et de contrôler le cœur du réacteur, ainsi que de dévier le jet de sodium chaud sortant du cœur. Ces moyens, et la structure qui les maintient, forment un ensemble appelé «couvercle-cœur». Ce couvercle-cœur est suspendu audit bouchon, inclus dans le P.B.T., par une structure de suspension; l'ensemble de ces trois structures: bouchon, éléments de suspension et couvercle-cœur, est appelé «bouchon-couvercle-cœur».

La présente invention concerne de façon plus particulière un tel bouchon couvercle-cœur.

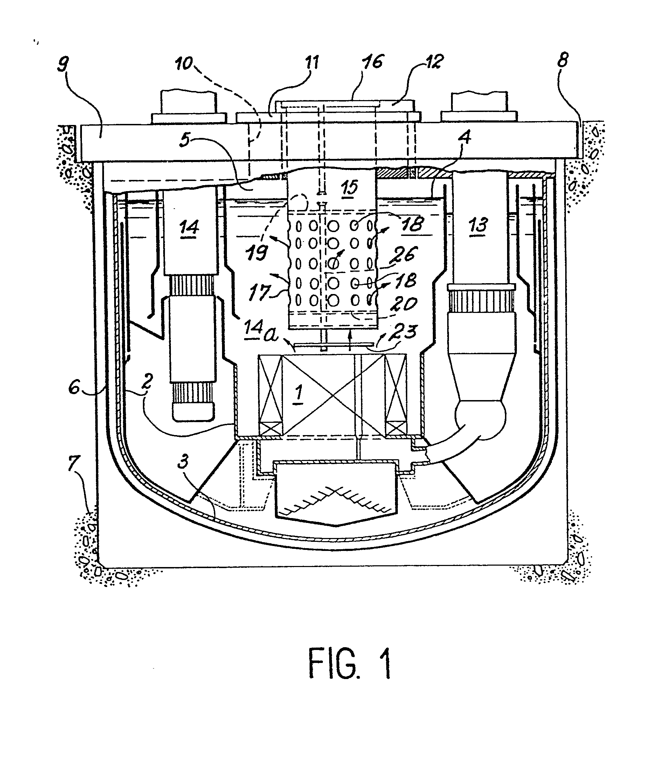

A titre d'illustration de l'art antérieur, on décrira ci-après en se référant à la fig. 1, un mode particulier de réalisation de bouchon couvercle-cœur de réacteur nucléaire tel qu'il figure dans le FR-A 2 289 031.

Sur la fig. 1, la référence 1 désigne le cœur d'un réacteur nucléaire à neutrons rapides, représenté immergé dans une masse de métal liquide, notamment du sodium, assurant le refroidissement du réacteur. Le cœur 1 est monté à l'intérieur d'une cuve interne 2, entourée d'une deuxième cuve, la cuve principale 3, fermée en sa partie supérieure par la dalle 9, confinant le sodium liquide, jusqu'au niveau schématisé dans 4, celui-ci étant surmonté d'une atmosphère 5 de gaz neutre de couverture, généralement de l'argon. La cuve 3 est elle-même entourée d'une autre cuve, dite cuve de sécurité 6, l'ensemble de ces cuves avec leur axe vertical commun, étant disposé à l'intérieur d'une enceinte de protection en béton 7. Cette dernière présente une large ouverture 8 en sa partie supérieure dans laquelle est montée une dalle de fermeture 9. Cette dalle comporte une ouverture centrale 10 pour la mise en place d'un système à deux bouchons 11 et 12 permettant, par leur rotation mutuelle, l'accès en tous points du cœur 1. La dalle 9 comporte en plus, des passages pour le montage des appareils qu'elle supporte tels que des pompes et échangeurs nécessaires à la circulation du sodium; un de chaque type a été représenté schématiquement sur la fig. 1 où la référence 13 désigne une pompe, et la référence 14 un échangeur. Enfin, l'instrumentation du cœur est supportée par une structure indépendante, le bouchon-couvercle cœur 15, lui-même suspendu au petit bouchon tournant 12.

Ce bouchon couvercle cœur se compose d'une plaque de tête 16 située au niveau du P.B.T. 12; cette plaque supporte un tube cylindrique ou virole 17 présentant sur les faces latérales des orifices tels que 18 régulièrement espacés. Des entretoises intermédiaires 19 et 20 s'appuient à leurs extrémités sur la virole 17. Ladite virole 17 est obturée en sa partie inférieure par une plaque épaisse constituant le bouclier thermique 23. Intérieurement à la virole 17, cheminent verticalement des tubes-fourreaux 26 servant au passage des barres de commande ou de l'instrumentation.

D'une façon générale, les réacteurs nucléaires, notamment ceux qui sont refroidis par métal liquide et qui comportent une dalle fermant le système de cuve contenant le métal sont munis d'au moins deux bouchons tournants, le plus souvent un petit bouchon tournant dans un plus grand. A ce petit bouchon tournant est suspendu la structure connue sous le nom de bouchon couvercle du cœur qui comporte pour introduire les barres de contrôle et l'instrumentation dans les éléments combustibles et le cœur, des éléments de suspension fixés à la plaque inférieure du petit bouchon tournant et un certain nombre de fourreaux pour le passage des barres de contrôle, ces deux derniers ensembles étant solidarisés au moins à un niveau horizontal. De plus, les structures de bouchon couvercle du cœur comportent parfois des plaques de tôle de protection contre les aérosols qui se forment dans l'atmosphère de gaz neutre surmontant le métal liquide chaud.

De telles structures sont décrites par exemple dans les brevets français FR-A 2 383 504 et FR-A 2 289 031.

Le document japonais JP-A 5 469 694 décrit un bouchon de couvercle de cœur d'un réacteur nucléaire traversant la dalle de fermeture 4. Pour permettre la régularisation du flux de fluide réfrigérant sortant du cœur et le placement à cet endroit de sondes de mesure, le bouchon et les tubes guide 5 des barres de commande qui lui sont liées, supportent une grille 6 de régularisation d'écoulement de ce flux, composée de tubes cylindriques 19 juxtaposés, et située juste au-dessus du cœur. Les sondes de mesure sont placées dans les tubes 19. Le bouchon se termine, au-dessus de la grille 6 par une surface déflectrice conique 15.

Les structures de bouchons couvercles-cœur connues à ce jour pour les réacteurs refroidis par métal liquide, et notamment elle qui vient d'être rappelée en détail, possèdent un certain nombre d'inconvénients. En particulier, leur grande rigidité, nécessaire pour résister aux séismes, est obtenue en utilisant des structures de forte épaisseur, ce qui leur confère une inertie thermique élevée. Celle-ci rend difficile l'absorption des phénomènes transitoires très importants consécutifs à des variations de régime de puissance engendrant des modifications de température brutales dans le métal chaud sortant du cœur du réacteur.

La présente invention a précisément pour objet un bouchon couvercle-cœur pour réacteur nucléaire refroidi par métal liquide dont la conception permet d'obtenir, avec des parois minces, la rigidité nécessaire pour pouvoir supporter des sollicitations d'ordre sismique; ce bouchon couvercle-cœur présente, grâce à l'emploi desdites parois minces un minimum d'inertie thermique lui permettant d'accepter des régimes transitoires qui provoquent des variations importantes de la température du métal liquide sortant directement du cœur.

Ce bouchon couvercle-cœur d'un réacteur nucléaire refroidi par métal liquide comportant un système de cuves fermées par une dalle munie de deux bouchons tournants et un bouchon couvercle de cœur suspendu au petit bouchon tournant, ledit bouchon couvercle de cœur comprenant une structure constituée, en partie, par des éléments de suspension fixés à la plaque inférieure du petit bouchon tournant, et, en partie par des éléments de fourreaux de barres de contrôle, ces deux ensembles étant solidarisés, au moins à un niveau horizontal, cette solidarisation est réalisée par des plaques métalliques verticales formant une grille en nid d'abeilles, et, une plaque métallique déflectrice, de forme conique, située directement au-dessus du cœur, et fixée à certains éléments de fourreaux par un système de dilatation à jeu radial et la plaque déflectrice supporte un faisceau de tubes permettant le prélèvement de métal liquide à la sortie du cœur pour la localisation d'éventuelles ruptures de gaines, et le logement de thermocouples, ce faisceau étant rigidifié par deux autres plaques tronconiques qui contribuent, avec la plaque, à dévier le jet de métal liquide sortant du cœur.

Dans une première variante de réalisation de l'invention, les éléments de suspension sont des fourreaux de barres de contrôle.

Dans une deuxième variante de réalisation de l'invention, les éléments de suspension sont des profilés de formes variées, par exemple, ayant une section en forme de croix ou de carré.

Selon une autre caractéristique importante de la présente invention, la plaque déflectrice du bouchon couvercle-cœur de réacteur nucléaire selon l'invention supporte un faisceau de tubes de prélèvement permettant le prélèvement de métal liquide à la sortie du cœur pour la localisation de ruptures de gaines éventuelles, et le logement de thermocouples, ce faisceau de tubes étant rigidifié par deux autres plaques tronconiques qui, de plus, contribuent avec la plaque déflectrice proprement dite, à dévier le jet de sodium chaud sortant du cœur.

Le bouchon couvercle-cœur de réacteur nucléaire objet de l'invention, réalise ainsi une structure à parois minces qui permet de supporter des régimes transitoires thermiques importants et de limiter, du fait de sa rigidité, les réactions aux sollicitations d'ordre sismique.

De toute façon l'invention sera mieux comprise à la lecture de la description qui suit d'un exemple de réalisation, description qui sera faite en se référant aux fig. 2 à 6 ci-jointes sur lesquelles:

– la fig. 2 est une vue en coupe d'un réacteur nucléaire à neutrons rapides refroidi au sodium et utilisant le bouchon couvercle-cœur objet de la présente invention;
– la fig. 3 est une coupe selon l'axe XX de la fig. 5 de l'ensemble du bouchon couvercle-cœur objet de l'invention;
– la fig. 4 est une vue en coupe selon le même plan et à plus grande échelle de l'ensemble du couvercle-cœur;
– la fig. 4a montre le détail de fixation avec jeu de la plaque déflectrice aux éléments de fourreaux;
– la fig. 5 est une coupe transversale à plus petite échelle de la fig. 4 selon le plan YY;
– la fig. 6 montre un détail agrandi de la fig. 5 dans le cas où le couvercle-cœur est suspendu par des tirants métalliques.

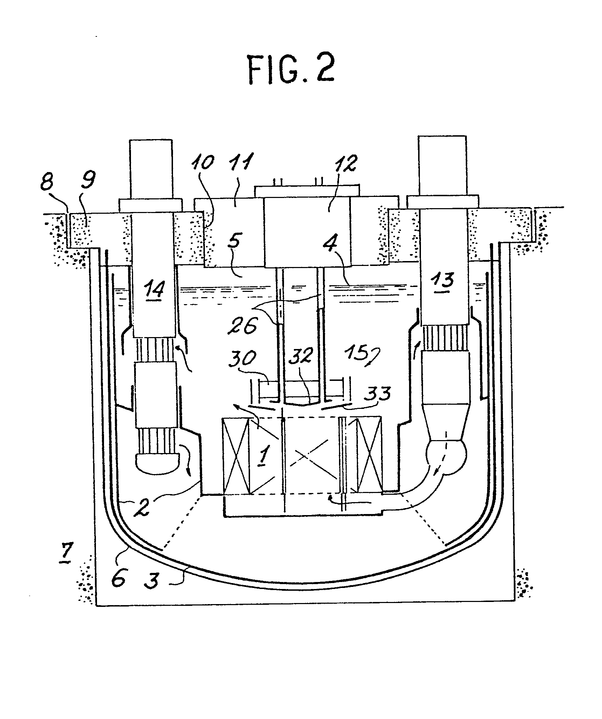

Sur la fig. 2, qui représente en coupe un réacteur nucléaire à neutrons rapides refroidi au sodium, on retrouve avec les mêmes chiffres de référence les principaux éléments de la fig. 1 de l'art antérieur qui ne seront donc pas décrits explicitement une nouvelle fois. Conformément à l'invention, ce réacteur est équipé d'un bouchon couvercle-cœur 15 qui comporte essentiellement, au-dessus du cœur 1 du réacteur, une plaque déflectrice 32 suspendue à la partie inférieure du petit bouchon tournant interne 12, soit par des tubes fourreaux 26, ce qui est le cas dans l'exemple de la fig. 2, soit par des tirants métalliques à profilés rigides comme on le verra ultérieurement. Ces éléments de suspension 26 sont solidarisés entre eux et avec des éléments de fourreaux 28 pour le passage des barres de commande 40, dans au moins un plan horizontal, par une grille 30 formée de plaques métalliques verticales entrecroisées 43.

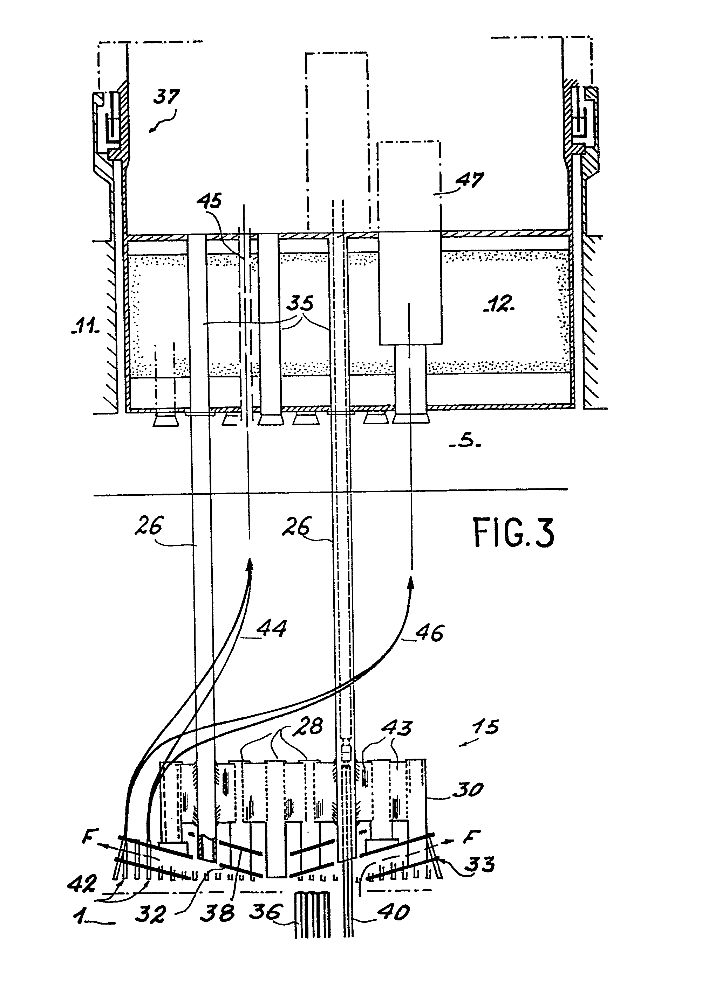

Sur la fig. 3 on voit, en vue schématique et plus en détail que sur la fig. 2, l'organisation de ce bouchon couvercle cœur 15.

Selon l'invention, un certain nombre de fourreaux métalliques 26 et d'éléments de fourreaux 28 sont en correspondance avec les passages 35 du bouchon 12 et sont utilisés pour l'introduction dans le cœur des barres absorbantes 40, qui permettent de régler le niveau de réactivité du réacteur.

Selon l'invention, certains éléments de fourreaux 28 supportent, sous la grille 30 et au-dessus du cœur 1 du réacteur, une plaque déflectrice 32 de forme conique qui, comme expliqué précédemment, permet de dévier le jet de sodium chaud sortant des assemblages 36 comme indiqué par les flèches F. Cette plaque déflectrice 32 supporte des tubes de prélèvement 42 qui servent d'une part à prélever du métal liquide à la sortie du cœur pour localiser l'existence d'une rupture de gaine éventuelle dans l'un des assemblages 36, et, d'autre part, à permettre le logement des thermocouples qui mesurent directement la température du sodium chaud sortant du

cœur 1. Les informations fournies par les thermocouples sont acheminées à partir de chacun des tubes de prélèvement 42 par des gaines 44 qui traversent le bouchon tournant 12 dans le conduit 45. Les prélèvements de sodium chaud à la sortie des assemblages 36 sont acheminés par des tubes métalliques 46 vers l'appareillage de localisation des ruptures de gaine 47.

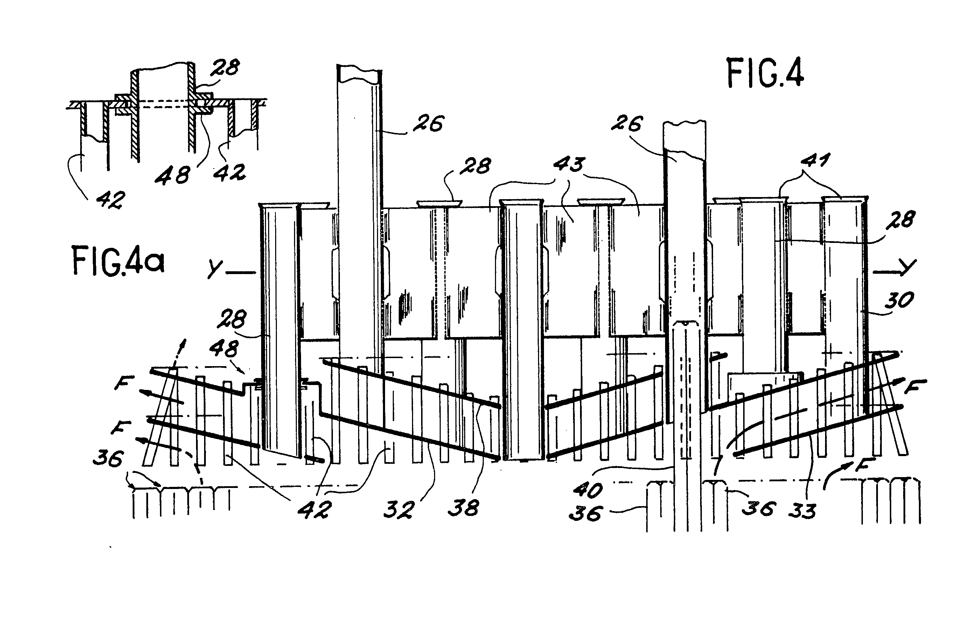

Sur la fig. 4, on retrouve en détail les éléments du couvercle-cœur: les fourreaux 26 des barres de commande, les éléments de fourreaux 28, les plaques 43 formant la grille 30, la plaque déflectrice 32 avec sa fixation à certains éléments de fourreaux 28 par un système de dilatation à jeu radial 48, mieux visible sur la fig. 4a, les tubes de prélèvement 42 et les plaques 33, 38 qui rigidifient ce faisceau de tubes et contribuent, avec la plaque 32, à dévier le jet de sodium.

On voit également plus en détail sur cette même fig. 4, la disposition respective des trois plaques déflectrices 32, 33 et 38 suspendues à la grille 30 par les éléments de fourreaux 28 avec un système de jeu latéral de dilatation visible en 48 sur la fig. 4a. La fig. 4 permet également de comprendre comment les tubes de prélèvement 42 sont fixés à la plaque déflectrice médiane 32 ainsi qu'aux plaques déflectrices supérieure 38 et inférieure 33.

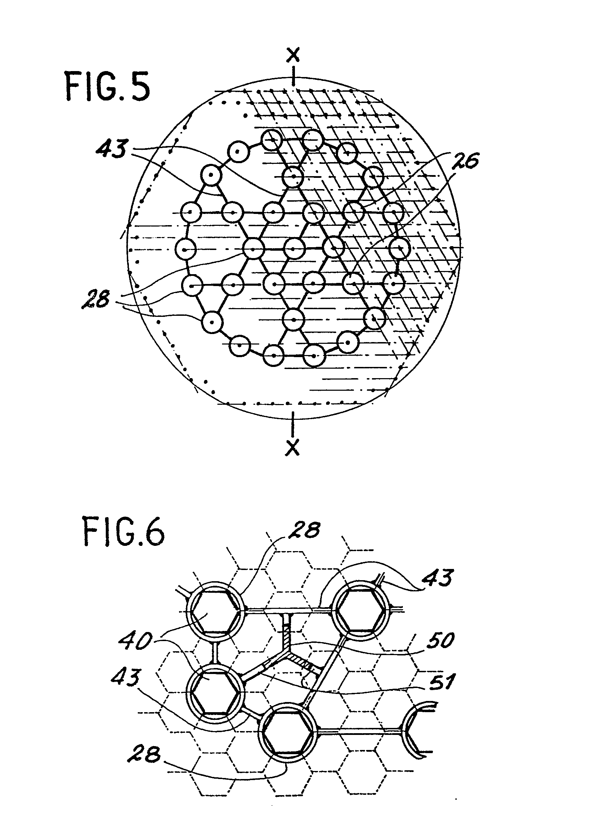

La fig. 5, qui est une vue en coupe horizontale selon le plan YY de la fig. 4, montre l'implantation, dans l'exemple particulier de réalisation décrit, des fourreaux 26 et des éléments de fourreaux 28 entretoisés par les plaques planes verticales 43.

La fig. 6 montre un exemple particulier du cas où le couvercle-cœur est suspendu au petit bouchon interne 12 par des tirants. On voit un certain nombre d'éléments de fourreaux 28 entretoisés par les plaques métalliques 43 et, en profilé en forme d'étoile à trois branches, l'extrémité inférieure 50 de l'un des tirants précédents, reliée par les plaques verticales d'entretoisement 51 aux plaques 43 précédentes. Il est bien entendu que cette forme de tirant n'est pas limitative, et que la section droite de ces mêmes tirants peut avoir une forme quelconque, compatible avec la rigidité nécessaire, notamment celle de profilés en forme de croix ou de carré.

**Revendications**

1. Réacteur nucléaire refroidi par métal liquide comportant un système de cuves (2, 3, 6) fermées par une dalle (9) munie de deux bouchons tournants et un bouchon couvercle de cœur suspen-du au petit bouchon tournant, ledit bouchon cou-vercle de cœur comprenant une structure consti-tuée, en partie, par des éléments de suspension (26) fixés à la plaque inférieure du petit bouchon tournant, et, en partie, par des éléments de fourreaux de barres de contrôle (28), ces deux ensembles étant solidarisés, au moins à un niveau horizontal, cette solidarisation est réalisée par des plaques métalliques verticales (43) formant une grille en nid d'abeilles (30), et une plaque métallique déflectrice (32), de forme conique, située di-rectement au-dessus du cœur (1), et fixée à certains éléments de fourreaux par un système de dilatation à jeu radial (48) et la plaque déflectrice (32) supporte un faisceau de tubes (42) permettant le prélèvement de métal liquide à la sortie du cœur pour la localisation d'éventuelles ruptures de gaines, et le logement de thermocouples, ce faisceau étant rigidifié par deux autres plaques tronconiques (33, 38) qui contribuent, avec la plaque (32) à dévier le jet de métal liquide sortant du cœur.

2. Bouchon couvercle-cœur selon la revendi-cation 1, caractérisé en ce que les éléments de suspension (26) sont des fourreaux de barres de contrôle.

3. Bouchon couvercle-cœur selon la revendi-cation 1, caractérisé en ce que les éléments de suspension (26) sont des profilés de formes variées, ayant par exemple, une section en forme de croix ou de carré.

**Patentansprüche**

1. Flüssigmetall gekühlter Kernreaktor mit einem System von Behältern (2, 3, 6), die von einer Platte (9) geschlossen sind, die mit zwei drehbaren Deckelteilen und einem an dem klei-nen drehbaren Deckelteil aufgehängten Kern-kopfteil ausgerüstet ist, wobei der genannte Kernkopfteil eine Struktur aufweist, die teilweise von an der unteren Platte des kleinen drehbaren Deckels befestigten Aufhängelementen (26) und teilweise von Hülsenelementen für die Steuerstäbe (28) gebildet ist, die zwei Gesamtheiten zumindest auf einer horizontalen Ebene miteinander befestigt sind und diese Befestigung hergestellt ist durch vertikale Metallplatten (43), die ein Honigwabengitter (30) bilden, sowie einer konischen Ablenkmetallplatte (32), die sich unmittelbar oberhalb des Kerns (1) befindet und mit gewissen Hülsenelementen über ein radiales Wärmedehnungssystem (48) befestigt ist, und wobei die Ablenkplatte (32) ein Rohrbündel (42) trägt, welches den Abzug von Flüssigmetall am Kernauslass für die Lokalisierung etwaiger Hülsenbrüche und die Anordnung von Thermoelementen ermöglicht, wobei dieses Bündel durch zwei andere kegelstumpfförmige Platten (33, 38) versteift ist, die mit der Platte (32) dazu beitragen, die aus dem Kern austretende Flüssigmetallfontäne umzulenken.

2. Kernkopfteil nach Anspruch 1, dadurch gekennzeichnet, dass die Hängeelemente (26) Hülsen von Steuerstäben sind.

3. Kernkopfteil nach Anspruch 1, dadurch gekennzeichnet, dass die Hängeelemente (26) Profile unterschiedlicher Formen, mit zum Beispiel kreuzförmigem oder quadratischem Querschnitt sind.

**Claims**

1. Liquid metal-cooled nuclear reactor incorporating a system of vessels (2, 3, 6) sealed by a

7    0 127 539    8

slab (9) provided with two rotary plug and a core cover plug suspended on the small rotary plug, said core cover plug comprising a structure constituted in part by suspension elements (26) fixed to the lower plate of the small rotary plug, and in part by control rod sleeve elements (28), said two assembles being joined, at least at the horizontal level, by vertical metal plates (43) forming a honeycomb grid (30), and a conical metal deflecting plate (32) positioned directly above core (1) and fixed to certain sleeve elements by a radial clearance expansion system (48) and deflecting plate (32) supports a group of tubes (42) making it possible to sample the liquid metal at the outlet from the core in order to locate possible sheath fractures and the location of thermocouples, said group being rigidified by two other truncated cone-shaped plates (33, 38) which, with plate (32), contribute to the deflection of the liquid metal jet leaving the core.

2. Core cover plug according to claim 1, characterized in that the suspension elements (26) are control rod sleeves.

3. Core cover plug according to claim 1, characterized in that the suspension elements (26) are sections having varied shapes, e.g. a cross or square section.

FIG. 1

# FIG. 2

FIG.3

FIG.4

FIG.4a

0 127 539

FIG.5

FIG.6